# EUROPEAN PATENT SPECIFICATION

(11) **EP 1 269 713 B1**
(45) Date of publication and mention of the grant of the patent: **01.03.2006**
(21) Application number: 01917251.9
(22) Date of filing: 29.03.2001
(51) Int. Cl.: H04L 29/06

(54) **DATA NETWORKS**
DATENNETZWERKE
RESEAUX DE DONNEES

(30) Priority: 30.03.2000 EP 00302641
(43) Date of publication of application: 02.01.2003
(73) Proprietor: BRITISH TELECOMMUNICATIONS public limited company, London EC1A 7AJ (GB)
(72) Inventor: GRAY, Robert, Henry, Mark, County Antrim, Northern Ireland BT10 0AY (GB); BOYLE, Mark, Sean, County Down, Northern Ireland BT19 6YH (GB); CHUTER, Jeremy, Brian, Ipswich, Suffolk IP6 0AN (GB); HALE, Michael, Anthony, Colchester, Essex CO3 5SE (GB)
(74) Representative: Williamson, Simeon Paul
(86) International application number: PCT/GB2001/001418
(87) International publication number: WO 2001/076186

(56) References cited:
- EP-A- 0 919 912
- COLAJANNI M ET AL: "SCHEDULING ALGORITHMS FOR DISTRIBUTED WEB SERVERS" PROCEEDINGS OF THE INTERNATIONAL CONFERENCE ON DISTRIBUTED COMPUTING SYSTEMS,US,LOS ALAMITOS, CA.: IEEE, 27 May 1997 (1997-05-27), pages 169-176, XP000793033 ISBN: 0-8186-7814-3
- MALKIN GARY SCOTT: "DIAL-IN VIRTUAL PRIVATE NETWORKS USING LAYER 3 TUNNELING" PROCEEDINGS OF THE CONFERENCE ON LOCAL COMPUTER NETWORKS, 2 November 1997 (1997-11-02), XP002084438
- MOOI CHOO CHUAH ET AL: "Mobile virtual private dial-up services" BELL LABS TECHNICAL JOURNAL, JULY-SEPT. 1999, LUCENT TECHNOLOGIES, USA, vol. 4, no. 3, pages 51-72, XP002150714 ISSN: 1089-7089

## Description

### Field of the Invention

The present invention relates to methods of, computer programs for and apparatus for processing requests for target node identification data thereby enabling a user request to be serviced. More particularly, but not exclusively, the present invention relates to methods of, computer programs for, and apparatus for processing one or more requests received by an authorisation/authentication server for data enabling a tunnel to be built to any one of a plurality of target nodes of a virtual private data network.

### Background

In a typical arrangement for providing access to data networks, the end user of a client terminal connects to a network access server (NAS) of an access provider which, in turn, connects to a selected node of a data network, such as a content server or a home gateway (HG) of a private network. Generally, the connection between the client terminal and the NAS will use Point-to-Point Protocol (PPP). However, the connection between the NAS and the selected node, being a connection over a packet-switched data network such as the Internet, will generally use Internet Protocol (IP).

Where access is provided to a Virtual Private Data Network (VPDN) the connection between the NAS and the selected node will also use a tunnelling protocol such as Layer Two Forwarding (L2F) or Layer Two Tunnelling Protocol (L2TP). In VPDN terminology, the NAS is said to build a tunnel through the data network to the HG of the VPDN. Often, multiple HGs will be provided in a VPDN so as to provide service to larger numbers of simultaneous users. The collection of multiple HGs is known as a cluster of HGs. When providing access to multiple simultaneous end users of a VPDN using a cluster of HGs, the NAS will typically build multiple tunnels to different gateways of the cluster. This is to provide loadsharing and resilience. In general, access providers have many NASes so as to be able to provide service to large numbers of simultaneous end users.

When the client terminal first connects to a NAS, the NAS needs to perform some checks before it can provide access to the VPDN. These checks include authenticating the end user of the client terminal, checking the authorisation of the end user to use the services of the access provider, and setting up an appropriate mechanism for charging the end user for such use. These three functions are sometimes described as Authentication, Authorisation, and Accounting (AAA). One approach to implementing AAA functionality is to connect the NASes via a data link to one or more further servers which handle the authentication, authorisation and accounting functions. The industry standard protocol for providing AAA functionality for Internet access and service providers is the Remote Authentication Dial-In User Service (RADIUS) and a server conforming to the protocol is known as a RADIUS server. In general, access providers have many RADIUS servers connected to their NASes to provide loadsharing and resilience. Where an access provider has more than one RADIUS server, it is desirable for them to be functionally interchangeable so that any NAS may use any RADIUS server and the service provided will be functionally identical.

The RADIUS protocol is maintained by the Internet Engineering Task Force (IETF) and is documented in RFC 2138 (base protocol) and RFC 2139 (accounting extensions) which documents are incorporated herein by reference. Modifications to the RADIUS protocol are proposed in the IETF Internet Draft draft-ietf-radius-v2-06.txt. These three documents are available from the IETF at http://ietf.org. A method of processing access requests at an NAS/RADIUS server arrangement is described in European Patent publication No. EP-A-1 104 142.

With an end user wishing to connect to a VPDN via an access provider, each RADIUS server will generally hold the IP addresses corresponding to HGs of the VPDN. The end user is normally given a phone number corresponding to the access provider and a user name and password or other security data. The end user dials-up the access provider using his/her client terminal, is connected to a NAS and then provides his/her user name and password. Using this information, the NAS consults a RADIUS server to authenticate/authorise the end user and set up the necessary accounting procedures. The RADIUS server also provides the NAS with the IP addresses of the HGs for building a tunnel to. Communication between the NAS and the RADIUS Server follows the client/server model with the NAS passing a request to the RADIUS server which provides a response in return.

A limitation of the RADIUS protocol is that it only permits a response string of up to a maximum of 253 characters. However, IP addresses are expressed in dotted-decimal notation, e.g. 132.252.13.255. In practice, this gives a limit of approximately 12 to 16 IP addresses that can be specified without resorting to compression techniques. Since gateways to data networks, including HGs of a VPDN, can only

A limitation of the RADIUS protocol is that it only permits a response string of up to a maximum of 253 characters. However, IP addresses are expressed in dotted-decimal notation, e.g. 132.252.13.255. In practice, this gives a limit of approximately 12 to 16 IP addresses that can be specified without resorting to compression techniques. Since gateways to data networks; including HGs of a VPDN, can only handle a limited number of simultaneous users (presently a maximum of approximately 1,000 to 1,500 simultaneous users) this limitation of the RADIUS protocol results in a limit of the number of simultaneous users that can be provided with access to a data network, such as a VPDN, via one access provider.

Moreover, the operating systems used by currently commercially available NASes, such as those available from Cisco Systems, Inc. (TM) and Lucent Technologies, Inc. (TM), result in a more stringent limitation in that the NAS can only accept a response string of up to 80 characters from the RADIUS server for specifying the HGs of a VPDN. In practice, this means that the RADIUS server can only provide about 4 IP addresses corresponding to HGs of a VPDN. This limits the number of simultaneous users of the VPDN to a maximum of approximately 6,000.

The limitations identified above present significant problems in providing access or service to data networks, such as VPDNs, requiring larger numbers of.: simultaneous users. The present invention provides a solution to these problems.

Colajanni M et al: "Scheduling Algorithms for Distributed Web Servers" Proceedings of the International Conference on Distributed Computing Systems, US, Los Alamitos, CA.: IEEE, 27 May 1997 (1997-05-27), pages 169-176, XP000793033; ISBN: 0-8186-7814-3, describes and compares several different methods by which a Domain Name Server provides a different IP address in response to a request to provide an IP address corresponding to a submitted URL, from one similar request to another so as to distribute the load efficiently between multiple "mirror" hostings of a particular resource.

EP 0 919 912 describes a multi-server system in which a small subset of the total number of servers on the network are used to hold duplicate copies of files to provide back-ups. Each client maintains a list of available servers holding duplicate copies of the files of interest to the user of each client (whose interests are stored as a set of preferences for the user). When a user connects to one such server, it sends a listing of available servers which is stored locally at the client. If a server in the list is unavailable, the client will attempt to connect to another one of the servers within the listing.

### Summary of the Invention

According to a first aspect of the present invention there is provided a method as set out in claim 1.

According to a second aspect of the present invention there is provided a computer program as set out in claim 14.

According to a third aspect of the present invention there is provided a server computer as set out in claim 16.

An advantage of the present invention is that it enables access providers to provide access or service to data networks, such as VPDNs, comprising a greater number of HGs than conventionally possible, and thereby to provide access to larger numbers of simultaneous end users than conventionally possible.

There now follows, by way of example only, a detailed description of preferred embodiments of the present invention in which:

### Brief Description of the Drawings

Figure 1 shows a simple arrangement of data processing elements for providing an end user with access to a VPDN;
Figure 2 shows a more general arrangement of data processing elements for providing an end user with access to a VPDN;
Figure 3 is a time line diagram showing a typical sequence of interactions between data processing elements involved in establishing a data link for providing an end user with access to a VPDN;
Figure 4 shows a list structure and a set of successive responses to similar requests according to first, second and third embodiments of the present invention; and
Figure 5 shows a list structure and set of successive responses to similar requests according to fourth, fifth and sixth embodiments of the present invention.

### Detailed Description of Embodiments of the Present Invention

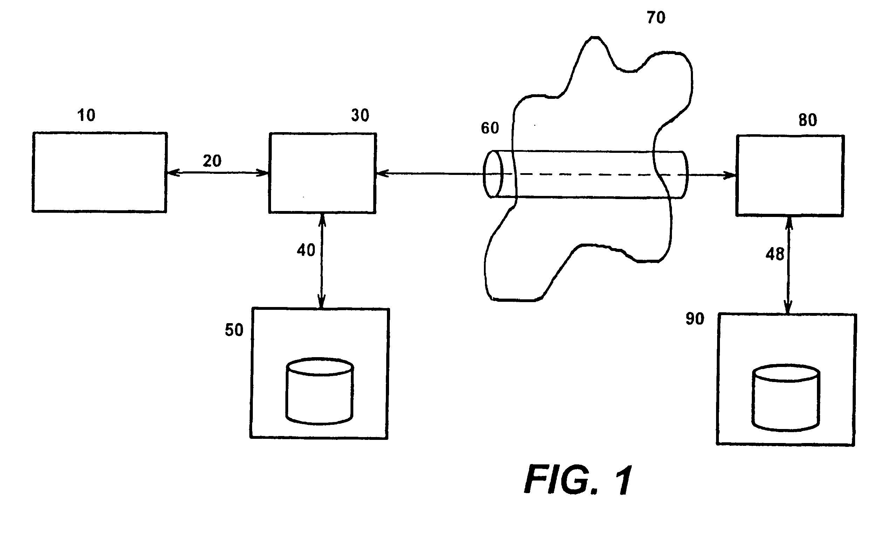

Figure 1 shows a simple arrangement of data processing elements for providing an end user with access to a VPDN. Client terminal 10 is connected to NAS 30 over a PPP link 20. Typically, the physical link is provided by the Public Switch Telephone Network (PSTN) with a pair of modems (not shown) at each end of the connection. Alternatively, the physical link may be provided over an Integrated Services Digital Network (ISDN) link or a Digital Subscriber Link (DSL) such as Asynchronous DSL (ADSL).

NAS 30 is connected to RADIUS server 50 over a data link 40. Typically, the NAS 30 and RADIUS server 50 will communicate using the User Datagram Protocol over the Internet Protocol (UDP/IP). This provides a fast service for transmitting high volume traffic between NAS 30 and RADIUS server 50. RADIUS server 50 also comprises one or more databases for storing the IP addresses of HGs of the VPDN and for maintaining data concerning the end user's use of the service for accounting and other purposes.

When providing access to a VPDN, NAS 30 builds a tunnel 60 using a tunnelling protocol such as L2F or L2TP through the Internet 70 to a HG 80 of the VPDN. Using tunnel 60, NAS 30 is able to provide the end user of client terminal 10 with access to the VPDN. Where the VPDN is arranged to provide its own AAA functionality HG 80 is connected to RADIUS server 90 over a data link 48 in the same manner as described above.

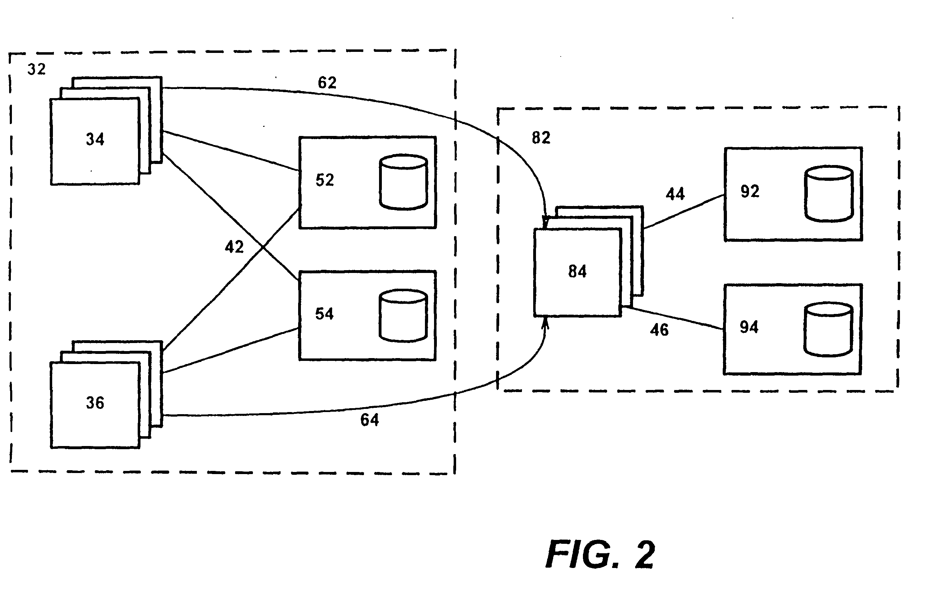

Figure 2 shows a more general arrangement of data processing elements, for providing an end user with access to a VPDN, such as may be used by a typical access provider. The arrangement comprises an access provider domain 32 and a VPDN domain 82. Access provider domain 32 comprises two clusters of NASes 34 and 36 located at two Points of Presence (PoPs). Access providers typically locate PoPs in different geographic locations to provide service to local end users. In access provider domain 32, NAS clusters 34 and 36 are each linked to two RADIUS servers 52 and 54 via data links 42 using UDP as described above. RADIUS servers 52 and 54 may or may not be located at the two PoPs. However, generally each NAS of NAS clusters 34 and 36 will be connected to each RADIUS server for loadsharing and resilience. Each NAS will select one of the RADIUS servers according to a predetermined selection algorithm when requesting AAA services.

VPDN domain 82 comprises a plurality of HGs arranged in a HG cluster 84 connected to two RADIUS servers 92 and 94 via data links 44 and 46. The RADIUS servers 92 and 94 provide AAA functionality to the VPDN in the same way that the RADIUS servers 52 and 54 provide AAA functionality to the access provider. Any of the NASes of NAS clusters 34 and 36 may build tunnels such as 62 and 64 to any of the HGs of HG cluster 84.

An end user of a client terminal (not shown in this Figure) may connect to any NAS of NAS clusters 34 and 36. Typically, the access provider will assign a local telephone number to each NAS cluster in a PoP. An end user will dial one of these numbers using his/her client terminal and will be connected to one of the NASes selected from the corresponding NAS cluster. The selected NAS will authenticate and check the authorisation of the end user by consulting one of the RADIUS servers 52 and 54. If the end user is successful, the NAS will provide access to the VPDN by building a tunnel to one of the HGs selected from HG cluster 84. The HG will be selected by the NAS from a list provided by the authorising RADIUS server. This list will contain the IP addresses of corresponding HGs selected from HG cluster 84. The IP addresses of the HGs of the VPDN corresponding to the particular end user have been pre-programmed into the databases of RADIUS servers 52 and 54.

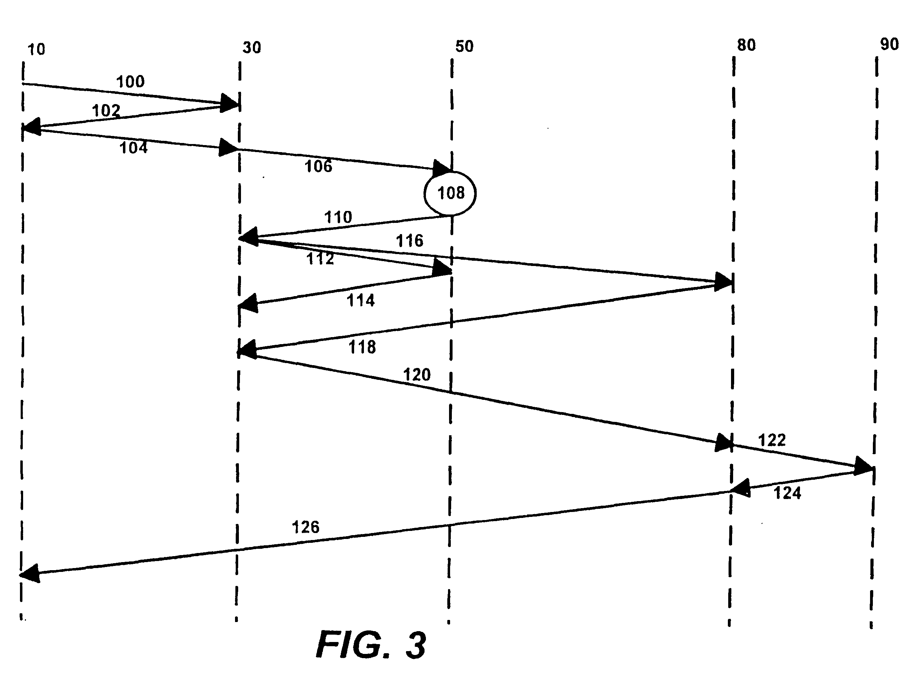

Figure 3 shows a typical sequence of interactions between the various data processing elements involved in providing an end user with access to a VPDN. The simple arrangement of data processing elements described above with reference to Figure 1 will be assumed although the sequence of interactions clearly applies to other arrangements of data processing elements such as the more general arrangement described above with reference to Figure 2. The vertical lines in Figure 3 represent the various data processing elements involved: client terminal 10, NAS 30, RADIUS server 50 connected to the NAS, HG 80, and RADIUS server 90 connected to the HG. The transverse arrows represent request-response transactions taking place between the various data processing elements.

At step 100, client terminal 10 requests the establishment of a PPP connection by passing a message to NAS 30. At step 102 NAS 30 responds by sending client terminal 10 a challenge using the Challenge Handshake Authentication Protocol (CHAP). The end user then enters information such as his user name, comprising a user name part and a domain name part, and a password at client terminal 10 and these are forwarded to NAS 30 in the form of a CHAP response at step 104. At step 106, NAS 30 passes an access request message to RADIUS server 50. The access request message contains information identifying the end user of client terminal 10 such as the complete user name, joint the domain name part of the user, or, alternatively, the telephone number from which the client terminal dialled in using the Dialled Number Information Service (DNIS).

At step 108, in response to the access request message, RADIUS server 50 performs a database query using the end user identification information provided to authenticate the end user, check the end user's authorisation, if authorised, and provide IP addresses corresponding to HGs of the VPDN. The IP addresses of the HGs of the VPDN corresponding to the particular end user have been pre-programmed into the database of RADIUS server 50. If the end user is successful, RADIUS server 50 sends an access accept message to access server 30 at step 110. This message contains selected IP addresses of HGs of the VPDN for building a tunnel to. If the end user is unsuccessful, RADIUS server 50 sends an access reject message to access server 30. Access server 30 may then send a further access request message to RADIUS server 50 using different end user identification information, and the process may be repeated until access is either accepted or finally rejected.

With implementations using NASes provided by Cisco Systems, Inc. (TM), the authentication sequence follows a three-phase model. Up to three access request messages are sent from the NAS to the RADIUS server in sequence to authenticate/authorise the end user. The first attempt uses DNIS - i.e. the dialled-in telephone number - to identify the user; if this fails the second attempt uses the domain part of the user name; if this fails the third and final attempt uses the complete user name. If the third attempt fails then access is denied.

Assuming the end user is successful as mentioned above, the access accept message contains the IP addresses of HGs of the VPDN for building a tunnel to. Because of the above-mentioned limitations on the length of the access accept message transmissible by the RADIUS server and on the length of messages acceptable to certain commercially available NASes, it may be that only the IP addresses of a selected subset of the HGs of the VPDN are provided in the access accept message. However, IP addresses corresponding to different ones of the entire set of HGs are provided in response to successive access requests as described below in greater detail.

Having received the access accept message, NAS 30 sends an accounting request message to RADIUS server 50 at step 112 which replies at step 114 with an accounting response message in confirmation. Simultaneously, at step 116, NAS 30 builds a tunnel using a tunnelling protocol such as L2F or L2TP to HG 80 of the VPDN selected from the HG IP addresses provided in the access accept message at step 110. NAS 30 uses an algorithm to select which one of the HGs to build a tunnel to. At step 118 HG 80, i.e. the selected HG, responds to NAS 30 confirming the establishment of the tunnel.

At step 120, NAS 30 replays the request for establishment of a PPP connection originally sent by client terminal 10 at step 100. However, at step 120, the request is passed from NAS 30 to HG 80 of the VPDN through the tunnel. At step 122 HG 80 passes an access request message to RADIUS server 90 of the VPDN, which queries its database. If the end user is successful, RADIUS server 90 passes an access accept message to HG 80 at step 124 and HG 80 completes the establishment of the PPP connection to client terminal 10 by passing information including an IP address assigned to client terminal 10 through the tunnel and through to client terminal 10 at step 126. This completes the establishment of the data link for providing the end user with access to the VPDN.

### First, Second and Third Embodiments of the Present Invention

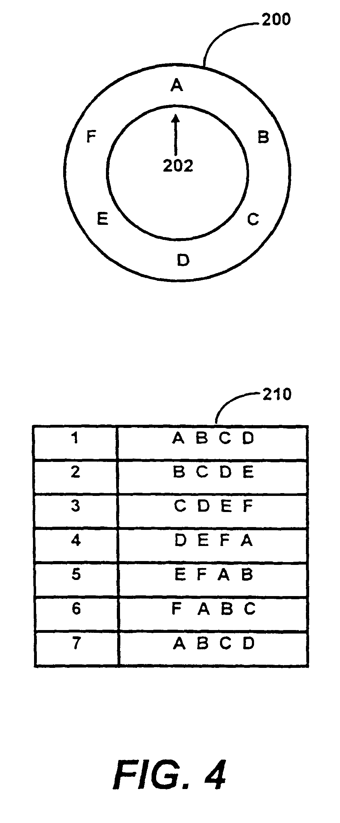

Methods of selecting a subset of the entire set of HGs of a VPDN will now be described with reference to Figure 4. The simple arrangement of data processing elements described above with reference to Figure 1 will be assumed although other arrangements of data processing elements, such as the more general arrangements described above with reference to Figure 2, will clearly be possible. Let us also assume, for the purposes of illustration, that the HG cluster of the VPDN comprises six HGs represented by the letters A, B, C, D, E and F, and that RADIUS server 50 can provide NAS 30 with IP addresses corresponding to only four of the HGs of the VPDN in a single access accept message.

Figure 4 shows a list structure and a set of successive responses to similar requests according to first, second, and third embodiments of the present invention. RADIUS server 50 maintains a circular list 200 for each end user, or group of end users, for whom access to the VPDN is to be provided. Circular list 200 comprises the IP addresses of each of the HGs of the VPDN as its elements. Circular list 200 has no repetitions. RADIUS server 50 also maintains a pointer 202 for each such end user or group of end users.

According to the first embodiment of the present invention, on initialisation or resetting of RADIUS server 50, pointer 202 is set to point to a first element of list 200 such as HG A. For each successful access request message received, RADIUS server 50 selects four successive IP addresses from circular list 200 starting with the element indicated by pointer 202. These four IP addresses are sent to NAS 30 in the responding access accept message. Pointer 202 is then set to the next successive element on circular list 200.

Table 230 shows the IP addresses provided in seven successive access accept messages. With pointer 202 initially set to HG A, the first access accept message provides IP addresses for HGs A, B, C and D as shown in row 1 of table 230. The second access accept message provides IP addresses for HGs B, C, D and E, and so on until the cycle repeats itself on the seventh access accept message. Thus, over a set of six successive access accept/access accept transactions RADIUS server 50 is able to provide to NAS 30 IP addresses corresponding to all six HGs of the VPDN. Moreover, the weighting between the six HGs is equal with each place in the list of IP addresses provided in each single access accept message being occupied by the IP address of each of the HGs exactly once.

If RADIUS server 50 is functioning properly, this method provides equal loadsharing of HGs A to F over time whilst still providing resilience in case one of the HGs is non-functional in that each access accept message provides four different HGs to which NAS 30 may build a tunnel. However, in a situation in which problems are occurring with RADIUS server 50, such as unforeseen errors occurring which require the RADIUS server to be periodically reset, it may be advantageous to provide NAS 30 with IP addresses corresponding to a randomly selected subset of the entire set of HGs of the VPDN.

According to a second embodiment of the present invention, which is a variant of the first embodiment, pointer 202 is set to point to one of the elements of circular list 200 at random each time an access accept message has been transacted. Thus, for each access accept message, IP addresses corresponding to four successive HGs from circular list 200 are provided, but the first element is selected at random. Thus, over a sufficiently long series of access requests/access accept transactions, RADIUS server 50 is able to provide NAS 30 with the IP addresses of all six HGs of the VPDN, evenly distributed as described above, despite the possibility that RADIUS server 50 may need to be occasionally reset.

According to a third embodiment of the present invention, which is a variant of the second embodiment, pointer 202 is randomised as before but only immediately after initialisation or resetting of RADIUS server 50. After initially being randomised, pointer 202 progresses sequentially through circular list 200 as described above with respect to the first embodiment. This method provides a compromise between the objectives of the first and second embodiments in that loadsharing problems caused by the need to reset RADIUS server 50 are addressed by initially randomising pointer 202, but evenly distributed loadsharing is achieved at a finer scale after initialisation or resetting by progressing pointer 202 sequentially through such a list 200.

### Fourth, Fifth and Sixth Embodiments

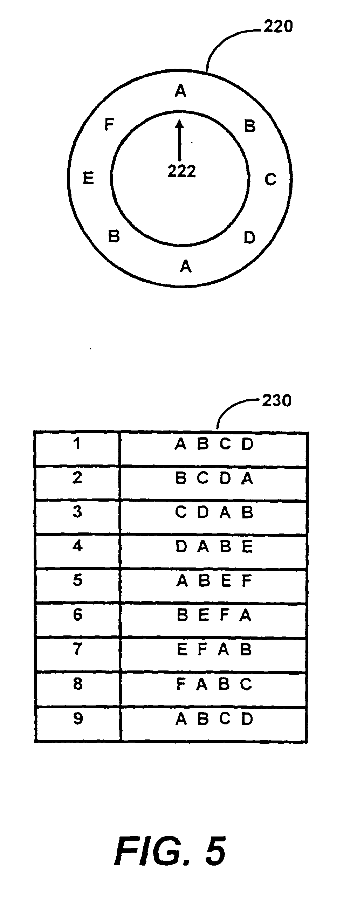

Methods of selecting a subset of the entire set of HGs of a VPDN will now be described with reference to Figure 5. Again, the simple arrangement of data processing elements described above with reference to Figure 1 will be assumed although other arrangements of data processing elements such as the more general arrangements described above with reference to Figure 2 will clearly be possible. Let us again assume, for the purposes of illustration, that the HG cluster of the VPDN comprises six HGs represented by the letters A, B, C, D, E and F, and that RADIUS server 50 can only provide NAS 30 with IP addresses corresponding to only four of the HGs of the VPDN in a single access accept message.

Figure 5 shows a list structure and a set of successive responses to similar requests according to fourth, fifth, and sixth embodiments of the present invention which are respectively variants of the first, second and third embodiments described above. As before, RADIUS server 50 maintains a circular list 220 for each end user, or group of end users, for whom access to the VPDN is to be provided. As before, circular list 220 comprises the IP addresses of each of the HGs of the VPDN as its elements. However, unlike circular list 200, circular list 220 does have repetitions - for example, HGs A and B both appear twice. RADIUS server 50 also maintains a pointer 222 for each end user or group of end users. The functioning of pointer 222 for the fourth, fifth, and sixth embodiments is as with pointer 202 described above according to the first, second and third embodiments respectively. However, the presence of repetitions in circular list 220 creates a weighting of the IP addresses of HGs provided in a series of access accept messages. This is useful if some HGs of a VPDN are to be preferred over others, for example, if some HGs are able to handle greater numbers of simultaneous end users that others. Furthermore, circular list 220 has been chosen so that, despite repetitions, any selection of four successive elements of the list will contain four different HGs. Thus, when RADIUS server 50 sends the IP addresses of four successive elements of the circular list to NAS 30, there will be four different IP addresses corresponding to four different HGs for NAS 30 to choose from with no wasteful repetitions.

Table 230 shows the IP addresses provided in seven successive access accept messages according to the fourth embodiment of the present invention. With pointer 222 initially set to HG A, the first access accept message provides IP addresses for HGs A, B, C and D as shown in row 1 of table 230. The second access accept message provides IP addresses for HGs B, C, D and A, and so on until the cycle repeats itself on the ninth access accept message. Thus, over a set of eight successive access accept/access accept transactions RADIUS server 50 is able to provide to NAS 30 IP addresses corresponding to all six HGs of the VPDN. However, the weighting between the six HGs is not even with HGs A and B featuring twice as often as HGs C, D, E and F.

Since pointer 222 performs the same function in each of the fourth, fifth and sixth embodiments as pointer 202 does, in the first, second and third embodiments, the fourth embodiment is susceptible to failure of RADIUS server 50 as described above. The fifth and sixth embodiments, however, address the possibility of RADIUS server failure as do the second and third embodiments respectively, save that, over a sufficiently long series of access requests/access accept transactions, the weighting between HGs is not even with HGs A and B featuring twice as often as HGs C, D, E and F.

It is to be understood that variations of the above-described embodiments of the present invention are possible in which the circular list structure comprises some or all of the HGs of the VPDN, with one or more repetitions of some or all of the elements, arranged in any order whatsoever. It is also to be understood that one or more elements of the circular list may be passed in each access accept message, and that, where more than one element is passed, the elements may be chosen in succession from the pointer or according to an alternate rule.

It is also to be understood that data structures other than circular lists may be used to implement the present invention, such as linear lists, hierarchical structures and networked structures.

It is also to be understood that variations of the above-described embodiments are possible in which the HG is not directly connected to a VPDN but to a NAS of a further service provider. The function of the further NAS may be to connect users to a VPDN, or to the Internet.

It is also to be understood that a NAS and RADIUS server of the present invention may be implemented in the same data processing device and that a RADIUS server or servers may be substituted by a server or servers performing equivalent functions such as servers conforming to the IETF's DIAMETER protocol or Common Open Policy Service protocol (COPS). The DIAMETER framework and architecture is defined in draft-calhoun-diameter-framework-05.txt and the base protocol in draft-calhoun-diameter-12.txt. The COPS framework and architecture is defined in draft-ietf-rap-framework-03.txt and the base protocol in draft-ietf-rap-cops-08.txt. All four documents are available from the IETF at http://ietf.org. Similarly, a NAS may be substituted by a server or servers performing similar functions such as a proxy server, a firewall or a redirect server.

The methods according to the invention will typically be performed by suitably programmed equipment. The equipment would typically be programmed by loading to memory of the equipment the relevant programme or programmes. The programme(s) would typically be delivered on a suitable data carrier, such as an optically readable memory (e.g. CDROM,DVD, mini-disc, etc.), or a magnetically readable memory (e.g. tape, disc, hard drive etc.) or on an optical or radio frequency carrier (over an optical fibre link or a radio link) or as an electrical signal via a wired data link. Where permitted, protection is sought for the programme(s) and / or the programme(s) on a suitable (e.g. computer-readable) data carrier.

## Claims

1. A method of processing requests (106) for target node (84) identification data received from a first node (34,36) of a data network (32) at a second node (52,54) of the data network, said first node (34,36) processing user requests (100), the second node (52,54) having access to a data store in which is stored target node identification data for a set (84) of a plurality of target nodes, each target node of said set being interchangeably useable by said first node (34,36) to service a user request (100), said method comprising the following steps:
a) receiving, at said second node (52,54), a plurality of similar requests (106) from the first node, each one of said similar requests (106) relating to said set (84) of target nodes; **characterised by**
b) in response to a first said similar request (106), selecting a first subset of said set (84) of target nodes and transmitting data identifying said first subset of target nodes to said first node (34,36), wherein said first subset of target nodes comprises more than one, but less than all, of the target nodes in said set (84) of target nodes; and
c) in response to a second said similar request (106), selecting a second subset of said set (84) of target nodes and transmitting data identifying said second subset of target nodes to said first node (34,36),
wherein said second subset also comprises more than one, but less than all, of said target nodes in said set (84) of target nodes and wherein said second subset of target nodes includes at least one target node which is not included in said first subset of target nodes.

2. A method according to claim 1, wherein the plurality of target nodes of each subset are selected so that the data transmitted to the first node (34,36) in response to the plurality of similar requests (106) tends to distribute the occurrence of each of the target nodes of the set (84) according to a predetermined weighting.

3. A method according to claim 2, wherein the target nodes of each subset are selected so that the data transmitted to the first node in response to the plurality of similar requests (106) tends to distribute the occurrence of each of the target nodes of the set substantially evenly among the plurality of target nodes.

4. A method according to claim 2, wherein the target nodes of each subset are selected so that the data transmitted to the first node (34,36) in response to the plurality of similar requests (106) tends to distribute the occurrence of each of the target nodes of the set (84) so as to favour the occurrence of one or more of said target nodes in said distribution (84) over other of said target nodes.

5. A method according to any preceding claim, wherein the plurality of similar requests (106) are received at the second node (52,54) in succession and for each said request (106) the first of the plurality of selected target nodes of each subset are selected according to a predetermined sequence.

6. A method according to any of claims 1 to 4, wherein the plurality of similar requests (106) are received at the second node (52,54) in succession and for each said request (106) the first of the plurality of selected target nodes of each subset are selected according to a random sequence.

7. A method according to claim 5, wherein the predetermined sequence comprises repeated elements.

8. A method according to claim 5, wherein the predetermined sequence does not comprise repeated elements.

9. A method according to any preceding claim, wherein the first node (34,36) comprises a network access server (34,36).

10. A method according to any preceding claim, wherein the second node (52,54) comprises an authentication or authorisation server (52,54).

11. A method according to any preceding claim, wherein the target node identification data for a particular target node comprises a network address of said target node.

12. A method according to any preceding claim, wherein the set (84) of a plurality of target nodes is a home gateway or home gateway cluster (84) of a virtual private data network (82).

13. A method according to claim 12, wherein the target node identification data enables the first node (34,36) to establish a data packet tunnel (60,62,64) to a home gateway (84) of the virtual private data network (82).

14. A computer program for performing the method of any preceding claim.

15. A data carrier medium carrying the computer program of claim 14.

16. A server computer (52,54) for processing requests (106) for target node (84) identification data received from a first node (34,36) of a data network (32) by the server computer (52,54) which forms a second node (52,54) of the data network (32), said first node (34,36) processing user requests (100), and the server computer (52,54) having access to a data store in which is stored target node identification data for a set (84) of a plurality of target nodes, each target node of said set being interchangeably useable by said first node (34,36) to service a user request (100), said server computer comprising:
a) receiving means for receiving a plurality of similar requests (106) from the first node each relating to said set (84) of target nodes; **characterised by**
b) processing and transmitting means for, in response to a first said similar request (106), selecting a first subset of said set (84) of target nodes and transmitting data identifying said first subset of target nodes to said first node (34,36), wherein said first subset of target nodes comprises more than one, but less than all, of the target nodes in said set (84) of target nodes and, in response to a second said similar request (106), selecting a second subset of said set (84) of target nodes and transmitting data identifying said second subset of target nodes to said first node (34,36), wherein said second subset also comprises more than one, but less than all, of said target nodes in said set (84) of target nodes and wherein said second subset of target nodes includes at least one target node which is not included in said first subset of target nodes.

## Patentansprüche

1. Verfahren zum Verarbeiten von Anforderungen (106) von Identifizierungsdaten für einen Zielknoten (84) von einem ersten Knoten (34, 36) eines Datennetzes (32), die bei einem zweiten Knoten (52, 54) des Datennetzes empfangen werden, wobei der erste Knoten (34, 36) Anwenderanforderungen (100) verarbeitet und der zweite Knoten (52, 54) auf einen Datenspeicher zugreifen kann, in dem Zielknoten-Identifizierungsdaten für eine Gruppe (84) mehrerer Zielknoten gespeichert sind, wobei jeder Zielknoten der Gruppe von dem ersten Knoten (34, 36) austauschbar verwendet werden kann, um eine Anwenderanforderung (100) zu bedienen, wobei das Verfahren die folgenden Schritte umfasst:
a) Empfangen mehrerer ähnlicher Anforderungen (106) von dem ersten Knoten bei dem zweiten Knoten (52, 54), wobei jede der ähnlichen Anforderungen (106) mit der Gruppe (84) von Zielknoten in Beziehung steht; **gekennzeichnet durch**
b) in Reaktion auf eine erste ähnliche Anforderung (106) Auswählen einer ersten Untergruppe der Gruppe (84) von Zielknoten und Senden von Daten, die die erste Untergruppe von Zielknoten identifizieren, zu dem ersten Knoten (34, 36), wobei die erste Untergruppe von Zielknoten mehr als einen, jedoch weniger als alle Zielknoten in der Gruppe (84) von Zielknoten enthält; und
c) in Reaktion auf eine zweite ähnliche Anforderung (106) Auswählen einer zweiten Untermenge der Gruppe (84) von Zielknoten und Senden von Daten, die die zweite Untergruppe von Zielknoten identifizieren, zu dem ersten Knoten (34, 36),
wobei die zweite Untergruppe ebenfalls mehr als einen, jedoch weniger als alle Zielknoten der Gruppe (84) von Zielknoten enthält und wobei die zweite Untergruppe von Zielknoten wenigstens einen Zielknoten enthält, der nicht in der ersten Untergruppe von Zielknoten enthalten ist.

2. Verfahren nach Anspruch 1, bei dem die mehreren Zielknoten jeder Untergruppe so gewählt werden, dass die in Reaktion auf die mehreren ähnlichen Anforderungen (106) zu dem ersten Knoten (34, 36) gesendeten Daten bestrebt sind, das Auftreten jedes der Zielknoten der Gruppe (84) in Übereinstimmung mit einer vorgegebenen Gewichtung zu verteilen.

3. Verfahren nach Anspruch 2, bei dem die Zielknoten jeder Untergruppe so gewählt werden, dass die in Reaktion auf die mehreren ähnlichen Anforderungen (106) zu dem ersten Knoten gesendeten Daten bestrebt sind, das Auftreten jedes der Zielknoten der Menge im Wesentlichen gleichmäßig auf die mehreren Zielknoten zu verteilen.

4. Verfahren nach Anspruch 2, bei dem die Zielknoten jeder Untergruppe so gewählt werden, dass die in Reaktion auf die mehreren ähnlichen Anforderungen (106) zu dem ersten Knoten (34, 36) gesendeten Daten bestrebt sind, das Auftreten jedes der Zielknoten der Gruppe (84) so zu verteilen, dass das Auftreten eines oder mehrerer der Zielknoten in der Verteilung (84) gegenüber anderen der Zielknoten begünstigt ist.

5. Verfahren nach einem vorhergehenden Anspruch, bei dem die mehreren ähnlichen Anforderungen (106) nacheinander bei den zweiten Knoten (52, 54) empfangen werden und für jede Anforderung (106) der erste der mehreren ausgewählten Zielknoten jeder Unterguppe in Übereinstimmung mit einer vorgegebenen Folge ausgewählt wird.

6. Verfahren nach einem der Ansprüche 1 bis 4, bei dem die mehreren ähnlichen Anforderungen (106) bei dem zweiten Knoten (52, 54) nacheinander empfangen werden und für jede Anforderung (106) der erste der mehreren ausgewählten Zielknoten jeder Untergruppe in Übereinstimmung mit einer Zufallsfolge ausgewählt wird.

7. Verfahren nach Anspruch 5, bei dem die vorgegebene Folge wiederholte Elemente enthält.

8. Verfahren nach Anspruch 5, bei dem die vorgegebene Folge keine wiederholten Elemente enthält.

9. Verfahren nach einem vorhergehenden Anspruch, bei dem der erste Knoten (34, 36) einen Netzzugriffsserver (34, 36) umfasst.

10. Verfahren nach einem vorhergehenden Anspruch, bei dem der zweite Knoten (52, 54) einen Authentisierungs- oder Autorisierungsserver (52, 54) umfasst.

11. Verfahren nach einem vorhergehenden Anspruch, bei dem die Zielknoten-Identifizierungsdaten für einen bestimmten Zielknoten eine Netzadresse des Zielknotens enthalten.

12. Verfahren nach einem vorhergehenden Anspruch, bei dem die Gruppe (84) mehrerer Zielknoten ein Heimat-Gateway oder ein Heimat-Gateway-Cluster (84) eines virtuellen privaten Datennetzes (82) ist.

13. Verfahren nach Anspruch 12, bei dem die Zielknoten-Identifizierungsdaten den ersten Knoten (34, 36) freigeben, damit er einen Datenpaket-Tunnel (60, 62, 64) zu einem Heimat-Gateway (84) des virtuellen privaten Datennetzes (82) herstellt.

14. Computerprogramm zum Ausführen des Verfahrens nach einem vorhergehenden Anspruch.

15. Datenträgermedium, das das Computerprogramm nach Anspruch 14, trägt.

16. Server-Computer (52, 54) zum Verarbeiten von Anforderungen (106) von Identifizierungsdaten für einen Zielknoten (84), die von einem ersten Knoten (34, 36) eines Datennetzes (32) durch den Server-Computer (52, 54) empfangen werden, der einen zweiten Knoten (52, 54) des Datennetzes (32) bildet, wobei der erste Knoten (34, 36) Anwenderanforderungen (100) verarbeitet und wobei der Server-Computer (52, 54) Zugriff auf einen Datenspeicher hat, in dem Zielknoten-Identifizierungsdaten für eine Gruppe (84) von mehreren Zielknoten gespeichert sind, wobei jeder Zielknoten der Gruppe von dem ersten Knoten (34, 36) austauschbar verwendet werden kann, um eine Anwenderanforderung (100) zu bedienen, wobei der Server-Computer umfasst:
a) Empfangsmittel, die mehrere ähnliche Anforderungen (106) von dem ersten Knoten empfangen, die jeweils mit der Gruppe (84) von Zielknoten in Beziehung stehen; **gekennzeichnet durch**
b) Verarbeitungs- und Sendemittel, die in Reaktion auf eine erste ähnliche Anforderung (106) eine erste Untergruppe der Gruppe (84) von Zielknoten wählen und Daten, die die erste Untergruppe von Zielknoten identifizieren, zu dem ersten Knoten (34, 36) senden, wobei die erste Untergruppe von Zielknoten mehr als einen, jedoch weniger als alle Zielknoten in der Gruppe (84) von Zielknoten enthält, und die in Reaktion auf eine zweite ähnliche Anforderung (106) eine zweite Untergruppe der Gruppe (84) von Zielknoten auswählen und Daten, die die zweite Untergruppe von Zielknoten identifizieren, zu dem ersten Knoten (34, 36) senden, wobei die zweite Untergruppe ebenfalls mehr als einen, jedoch weniger als alle Zielknoten in der Gruppe (84) von Zielknoten enthält, und wobei die zweite Untergruppe von Zielknoten wenigstens einen Zielknoten enthält, der nicht in der ersten Untergruppe von Zielknoten enthalten ist.

## Revendications

1. Procédé de traitement de demandes (106) de données d'identification de noeud cible (84) reçues d'un premier noeud (34, 36) d'un réseau de données (32) au niveau d'un second noeud (52, 54) du réseau de données, ledit premier noeud (34, 36) traitant des demandes d'utilisateurs (100), le second noeud (52, 54) ayant accès à une mémoire de données dans laquelle sont mémorisées des données d'identification de noeud cible pour un ensemble (84) d'une pluralité de noeuds cibles, chaque noeud cible dudit ensemble étant utilisable de façon interchangeable par ledit premier noeud (34, 36) pour desservir une demande d'utilisateur (100), ledit procédé comprenant les étapes suivantes :
a) recevoir, au niveau dudit second noeud (52, 54), une pluralité de demandes similaires (106) provenant du premier noeud, chacune desdites demandes similaires (106) se rapportant audit ensemble (84) de noeuds cibles, **caractérisé par**
b) en réponse à une première dite demande similaire (106), la sélection d'un premier sous-ensemble dudit ensemble (84) de noeuds cibles et la transmission de données identifiant ledit premier sous-ensemble de noeuds cibles audit premier noeud (34, 36), dans lequel ledit premier sous-ensemble de noeuds cibles comprend plus d'un seul noeud, mais moins que la totalité des noeuds, parmi les noeuds cibles dudit ensemble (84) des noeuds cibles, et
c) en réponse à une seconde dite demande similaire (106), la sélection d'un second sous-ensemble dudit ensemble (84) de noeuds cibles et la transmission de données identifiant ledit second sous-ensemble de noeuds cibles audit premier noeud (34, 36),
dans lequel ledit second sous-ensemble comprend également plus d'un seul, mais moins que la totalité, desdits noeuds dans ledit ensemble (84) de noeuds cibles et dans lequel ledit second sous-ensemble de noeuds cibles comprend au moins un noeud cible qui n'est pas inclus dans ledit premier sous-ensemble de noeuds cibles.

2. Procédé selon la revendication 1, dans lequel la pluralité de noeuds cibles de chaque sous-ensemble est sélectionnée de manière à ce que les données transmises au premier noeud (34, 36) en réponse à la pluralité de demandes similaires (106) tendent à répartir l'occurrence de chacun des noeuds cibles de l'ensemble (84) conformément à une pondération prédéterminée.

3. Procédé selon la revendication 2, dans lequel les noeuds cibles de chaque sous-ensemble sont sélectionnés de manière à ce que les données transmises au premier noeud en réponse à la pluralité de demandes similaires (106) tendent à répartir l'occurrence de chacun des noeuds cibles de l'ensemble pratiquement régulièrement parmi la pluralité des noeuds cibles.

4. Procédé selon la revendication 2, dans lequel les noeuds cibles de chaque sous-ensemble sont sélectionnés de manière à ce que les données transmises au premier noeud (34, 36) en réponse à la pluralité de demandes similaires (106) tendent à répartir l'occurrence de chacun des noeuds cibles de l'ensemble (84) de façon à favoriser l'occurrence d'un ou plusieurs desdits noeuds cibles dans ladite répartition (84) sur d'autres desdits noeuds cibles.

5. Procédé selon l'une quelconque des revendications précédentes, dans lequel la pluralité de demandes similaires (106) est successivement reçue au second noeud (52, 54) et, pour chaque dite demande (106), le premier noeud de la pluralité de noeuds cibles sélectionnés de chaque sous-ensemble est sélectionné conformément à une séquence prédéterminée.

6. Procédé selon l'une quelconque des revendications 1 à 4, dans lequel la pluralité des demandes similaires (106) est reçue successivement au second noeud (52, 54) et pour chaque dite demande (106), le premier noeud de la pluralité de noeuds cibles sélectionnés de chaque sous-ensemble est sélectionné conformément à une séquence aléatoire.

7. Procédé selon la revendication 5, dans lequel la séquence prédéterminée comprend des éléments répétés.

8. Procédé selon la revendication 5, dans lequel la séquence prédéterminée ne comprend pas des éléments répétés.

9. Procédé selon l'une quelconque des revendications précédentes, dans lequel le premier noeud (34, 36) comprend un serveur d'accès au réseau (34, 36).

10. Procédé selon l'une quelconque des revendications précédentes, dans lequel le second noeud (52, 54) comprend un serveur d'authentification ou d'autorisation (52, 54).

11. Procédé selon l'une quelconque des revendications précédentes, dans lequel les données d'identification de noeud cible pour un noeud cible particulier comprennent une adresse de réseau dudit noeud cible.

12. Procédé selon l'une quelconque des revendications précédentes, dans lequel l'ensemble (84) d'une pluralité de noeuds cibles est une passerelle de rattachement ou un groupe de passerelles de rattachement (84) d'un réseau de données privé virtuel (82).

13. Procédé selon la revendication 12, dans lequel des données d'identification de noeud cible permettent au premier noeud (34, 36) d'établir un tunnel de paquets de données (60, 62, 64) vers une passerelle de rattachement (84) du réseau de données privé virtuel (82).

14. Programme informatique destiné à exécuter le procédé selon l'une quelconque des revendications précédentes.

15. Support de données portant le programme informatique selon la revendication 14.

16. Ordinateur serveur (52, 54) destiné à traiter des demandes (106) pour des données d'identification de noeud cible (84) depuis un premier noeud (34, 36) d'un réseau de données (32) par l'ordinateur serveur (52, 54) qui forme un second noeud (52, 54) du réseau de données (32), ledit premier noeud (34, 36) traitant des demandes d'utilisateurs (100), et l'ordinateur serveur (52, 54) ayant accès à une mémoire de-données dans laquelle sont mémorisées des données d'identification de noeud cible pour un ensemble (84) d'une pluralité de noeuds cibles, chaque noeud cible dudit ensemble étant utilisable de façon interchangeable par ledit premier noeud (34, 36) pour desservir une demande d'utilisateur (100), ledit ordinateur serveur comprenant :
a) un moyen de réception destiné à recevoir une pluralité de demandes similaires (106) depuis le premier noeud, chacune se rapportant audit ensemble (84) de noeuds cibles ; **caractérisé par**
b) un moyen de traitement et de transmission destiné à sélectionner, en réponse à une première dite demande similaire (106), un premier sous-ensemble dudit ensemble (84) de noeuds cibles et transmettre des données identifiant ledit premier sous-ensemble de noeuds cibles audit premier noeud (34, 36), dans lequel ledit premier sous-ensemble de noeuds cibles comprend plus d'un seul, mais moins que la totalité, des noeuds cibles dans ledit ensemble (84) de noeuds cibles, et, en réponse à une seconde dite demande similaire (106), sélectionner un second sous-ensemble dudit ensemble (84) des noeuds cibles et transmettre des données identifiant ledit second sous-ensemble des noeuds cibles audit premier noeud (34, 36), dans lequel ledit second sous-ensemble comprend également plus d'un seul, mais moins que la totalité, desdits noeuds cibles dans ledit ensemble (84) de noeuds cibles et dans lequel ledit second sous-ensemble de noeuds cibles comprend au moins un noeud cible qui n'est pas inclus dans ledit premier sous-ensemble de noeuds cibles.
